# EUROPEAN PATENT APPLICATION

(11) **EP 1 233 637 A1**
(43) Date of publication of application: **21.08.2002**
(21) Application number: 00974905.2
(22) Date of filing: 10.11.2000
(51) Int. Cl.: H04Q 7/36, H04Q 7/22

(54) **MOBILE COMMUNICATION SYSTEM AND METHOD FOR CONTROLLING COMMUNICATION OF THE SAME**

(30) Priority: 10.11.1999 JP 31951799
(71) Applicant: NEC Corporation, Minato-ku, Tokyo 108-8001 (JP)
(72) Inventor: KIKUCHI, Hirofumi, NEC Corporation, Tokyo 108-8001 (JP)
(74) Representative: Glawe, Delfs, Moll & Partner
(86) International application number: JP0007931
(87) International publication number: WO01035688

(57) **Abstract**

The mobile communication system comprises a first base station 10 issuing a first pilot signal, a second base station 20 issuing a second pilot signal, and a state monitor 30 measuring an electronic intensity of the first pilot signal and an electronic intensity of the second pilot signal in a duplication region where a cell region of the first base station 10 and a cell region of the second base station 20 overlap and giving the notice of the result to the first base station 10. The first base station 10 sets hand-off parameters on the basis of the first and second electric field intensities being notified and gives a notice of the hand-off parameters to a mobile station 40. The mobile station 40, while moving from the cell region of the first base station 10 through the duplication region to the cell region of the second base station 20, measures an electric field intensity of the first pilot signal and an electric field intensity of the second pilot signal. Then the mobile station executes hand-off from the first base station 10 to the second base station 20 on the basis of the hand-off parameters being notified and the electronic field intensities of the first and the second pilot signals being measured.

## Description

### Technical Field

The present invention relates to a mobile communication system and a communication control method. More particularly, the invention relates to a mobile communication system and a communication control method which permit improvement of communication quality and communication line capacity regarding the CDMA (Code Division Multiple Access) process.

### Background Art

A mobile communication system known as the CDMA cellular system is popularly adopted at present.

In the CDMA cellular system, the frequency used for communication between a mobile phone terminal (mobile station) and base stations is uniform for all base stations. The communication method differs between the CDMA cellular system and the TDMA system using different frequencies for different base stations. As a result, signals used in communication between the base station and the own mobile station become interference wave for the communication between the base station and the other mobile stations. Intensity of interference wave is one of the causes affecting the communication quality of a CDMA cellular system.

For example, when a mobile station of a mobile phone terminal carries out hand-off, in a CDMA cellular system, the mobile station would conduct communication not only with the base station (or sector) with which communication has just been performed immediately prior to hand-off, but also with the base station (or sector) of the hand-off destination. In this case, radio wave issued by the hand-off destination base station (or sector) exerts an effect as interference wave also for mobile stations other than the mobile station to which hand-off is to be directed.

In a case where the mobile station receives a pilot signal transmitted by the base station, Ec/Io of the pilot signal will now be described. Ec/Io represents the ratio of the received intensity (Ec) of the pilot signal to the intensity (lo) of the interference wave received by the mobile station.

More specifically, in the CDMA cellular system, hand-off parameters defined as Ec/Io of the pilot signal are set forth as communication start conditions between the mobile station and the hand-off destination base station (or sector) and communication end conditions between the mobile station and the base station in communication therewith. The hand-off parameters include, among others, T_ADD used upon starting communication by the mobile station with the hand-off destination base station, and T_DROP used upon ending communication by the mobile station with the base station in communication therewith. More particularly, when Ec/Io of the pilot signal transmitted from the hand-off destination base station and received by the mobile station is over T_ADD, the mobile station starts communication with the hand-off destination base station. When Ec/Io of the pilot signal transmitted from the base station in communication and received by the mobile station is under T_DROP, the mobile station ends communication with that base station in communication.

In the case of a CDMA cellular system, the number of mobile stations connected to the base station is varying at all times. An increase in the number of mobile stations leads to an increase in intensity of interference wave (lo). A decrease in the number of mobile stations, in contrast, results in a decrease in the intensity of interference wave. Intensity of interference wave therefore varies with a change in the number of mobile stations connected to the base station. As a result, the value of Ec/Io of the pilot signal at a point cannot primarily be determined because the value of lo continually varies. Hand-off parameters T_ADD and T_DROP are defined by means of Ec/Io of the pilot signal. When T_ADD and T_DROP cannot be controlled constantly at appropriate values, the hand-off point of the mobile station cannot be kept constant.

Hand-off parameters have conventionally been fixed values obtained on the basis of the result of actual measurement of Ec/Io of the pilot signal by a person in charge of system maintenance. In a cellular system, therefore, it is desirable to set hand-off parameters rapidly and properly in response to the system load condition always varying to keep a constant hand-off point of the mobile station.

The present invention has therefore an object to provide a mobile communication system and a hand-off method thereof which permit improvement of communication quality and increasing the number (capacity) of communicable mobile stations.

Another object of the invention is to provide a mobile communication system and a hand-off method thereof which permits keeping a constant hand-off point and reduction of waves from the hand-off destination base station, which become interference waves for mobile stations other than the mobile station in hand-off.

Still another object of the invention is to provide a mobile communication system and a hand-off method thereof according to which it is possible to obtain an Ec/Io state of the pilot signal at the hand-off point; to determine a hand-off point of the mobile station on the basis of the Ec/Io state of the pilot signal thus obtained; to easily achieve the Ec/Io state of the pilot signal at the hand-off point; and to reduce the load applied to the entire system.

### Disclosure of Invention

The present invention provides a mobile communication system used in a method such as the CDMA process applied in communication between a mobile station and a base station, in which frequency is uniform for all base stations, comprising a first base station issuing a first pilot signal, a second base station issuing a second pilot signal, and a state monitor and having a duplication region in which a cell region of the first base station and a cell region of the second base station overlap.

The state monitor, provided in the duplication region, measures a first electric field intensity of the first pilot signal and a second electric field intensity of the second pilot signal, and notifies the result thereof to the first base station. The first base station sets hand-off parameters on the basis of the first and second electric field intensities notified by the state monitor, and notifies the hand-off parameters to the mobile station. And the mobile station, while moving from the cell region of the first base station, through the duplication region, to the cell region of the second base station, measures a third electric field intensity of the first pilot signal and a fourth electric field intensity of the second pilot signal, and executes hand-off from the first base station to the second base station on the basis of the hand-off parameters notified from the first base station, and the third and fourth electric field intensities.

In the above-mentioned mobile communication system, the hand-off parameters include a first parameter; and the mobile station can establish communication with the second base station when the fourth electric field intensity of the second pilot signal is at least equal to that of the first parameter. The first parameter can be dynamically set on the basis of the second electric field intensity notified by the state monitor so as to keep substantially a constant cell region of the second base station.

In the above-mentioned mobile communication system, the hand-off parameters include a second parameter; and the mobile station can end communication with the first base station when the third electric field intensity of the first pilot signal is smaller than that of the second parameter. The second parameter can be dynamically set on the basis of the first electric field intensity notified by the state monitor so as to keep substantially a constant cell region of the first base station.

In the above-mentioned mobile communication system, the first base station and the second base station may be arranged in the proximity of each other, and the state monitor may be arranged at a point of hand-off of the mobile station. It is also possible that the first electric field intensity and the third electric field intensity comprise intensity ratios relative to the electric field intensity of the first pilot signal and the electric field intensity of interference wave; the second electric field intensity and the fourth electric field intensity comprise intensity ratios relative to the electric field intensity of the second pilot signal and the electric field intensity of the interference wave; and the hand-off parameters are expressed by an intensity ratio of the electric field intensity of the pilot signal and the electric field intensity of the interference wave.

In the above-mentioned mobile communication system, the state monitor may periodically notify the first electric field intensity and the second electric field intensity to the first base station. The state monitor may notify the first electric field intensity and the second electric field intensity to the first base station, in response to a notification request of the first base station. The state monitor may be replaced by the mobile station.

The present invention provides also a communication control method of a mobile communication system used for communication between a mobile station and a base station such as the CDMA process, in which all frequencies are uniform for all the base stations, wherein there are provided a first base station, a second base station and a state monitor; there is provided a duplication region where respective cell regions of the first base station and the second base station overlap; the state monitor is provided in the duplication region; and the mobile station is communicating with the first base station. And wherein following step items are included: (a) the first base station issues a first pilot signal; (b) the second base station issues a second pilot signal; (c) the state monitor measures a first electric field intensity of the first pilot signal and a second electric field intensity of the second pilot signal, and notifies the result of measurement to the first base station; (d) the first base station sets hand-off parameters on the basis of the first and second electric field intensities notified to the state memory; (e) the first base station notifies the hand-off parameters to the mobile station; (f) the mobile station measures a third electric field intensity of the first pilot signal and a fourth electric field intensity of the second pilot signal; and (g) the mobile station executes hand-off from the first base station to the second base station on the basis of the hand-off parameters notified by the first base station and the third and fourth electric field intensities.

In the above-mentioned communication control method, the hand-off parameters include a first parameter; and in (g) above, the mobile station can establish communication with the second base station when the fourth electric field intensity of the second pilot signal is equal at least to the first parameter. The first parameter may be dynamically set on the basis of the second electric field intensity notified by the state monitor so that the cell region of the second base station is substantially constant.

The hand-off parameters may include a second parameter; and in (g) above, the mobile station may end communication with the first base station when the third electric field intensity of the first pilot signal is smaller than that of the second parameter. The second parameter may be dynamically set on the basis of the first electric field intensity notified by the state monitor so that the cell region of the first base station is substantially constant.

In (c) above, the state monitor may periodically notify the first electric field intensity and the second electric field intensity. In (c) above, the state monitor may notify the first electric field intensity and the second electric field intensity to the first base station in response to a notice request from the first base station.

In the above-mentioned communication control method, the sequence of execution of from (a) to (g) may be changed among them unless otherwise specified.

With the mobile communication system of the invention, it is possible, in a region where cell regions of a plurality of base stations overlap, to improve the communication quality in a CDMA cellular system by appropriately setting hand-off point for the mobile station to conduct hand-off for reducing interference wave.

By setting hand-off parameters corresponding to the value of Ec/Io of the pilot signal at a point, it is possible to keep a constant point of hand-off of the mobile station. It is therefore possible to appropriately set a hand-off point by properly setting values of hand-off parameters.

It becomes possible to automatically control hand-off parameters always at proper values. It is therefore possible to maintain a constant hand-off point, and hence to reduce radio waves from the hand-off destination base station, which become interference waves for mobile stations other than the mobile station in hand-off. As a result, the mobile communication system according to the present invention permits improvement of the communication quality.

### Brief Description of the Drawings

Fig. 1A illustrates an overall configuration of the mobile communication system of the present invention;
Fig. 1B illustrates a configuration of the state monitor of the mobile communication system of the invention;
Fig. 2A is a block diagram illustrating a configuration of the base station of the mobile communication system of the invention;
Fig. 2B is a block diagram illustrating a configuration of the mobile station of the mobile communication system of the invention;
Fig. 3A is a constitutional diagram for describing hand-off of the mobile communication system of the invention;
Fig. 3B is a constitutional diagram following Fig. 3A for describing hand-off of the mobile communication system of the invention;
Fig. 4A is a constitutional diagram following Fig. 3B for describing hand-off of the mobile communication system of the invention;
Fig. 4B is a constitutional diagram following Fig. 4A for describing hand-off of the mobile communication system of the invention;
Fig. 5 is a constitutional diagram following Fig. 4B for describing hand-off of the mobile communication system of the invention;
Fig. 6 is a flowchart illustrating communication start operation between a base station and a mobile station from among hand-off operations of the mobile communication system of the invention;
Fig. 7 is a flowchart following Fig. 6 illustrating communication start operation between a base station and a mobile station from among hand-off operations of the mobile communication system of the invention;
Fig. 8 is a flowchart illustrating communication end operation between a base station and a mobile station from among hand-off operations of the mobile communication system of the invention;
Fig. 9 is a flowchart following Fig. 8 illustrating communication end operation between a base station and a mobile station from among hand-off operations of the mobile communication system of the invention;
Fig. 10 illustrates cell regions in two adjacent base stations;
Fig. 11 illustrates for describing a hand-off region corresponding to Ec/Io of the pilot signal on the line A-A in Fig. 10 in a conventional example; and
Fig. 12 illustrates a hand-off region corresponding to Ec/Io of the pilot signal on the line A-A in Fig. 10 in the invention.

### Best Mode for Embodying the Invention

For more detailed explanation, the present invention will be described with reference to the attached drawings.

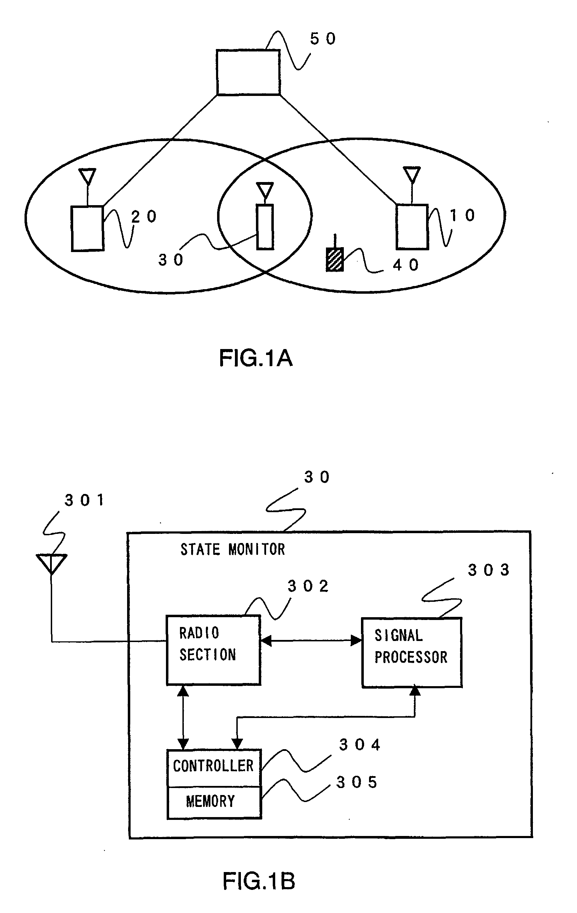

Fig. 1A illustrates an overall configuration of the mobile communication system of the invention.

Referring to Fig. 1A, the configuration of an embodiment of the mobile communication system of the invention comprises base stations 10 and 20 provided in the proximity of each other, a state monitor 30, a mobile station 40 capable of being connected to the base stations 10 and 20, and a host 50, wire-connected to the base stations 10 and 20, which controls operation of the base stations 10 and 20.

The base stations 10 and 20 are arranged so that cell regions of the both overlap.

The state monitor 30 is arranged between the base stations 10 and 20 in a region where cell regions of the base stations 10 and 20 overlap. It is particularly desirable that the state monitor 30 is provided at a point where the mobile station 40 conducts hand-off from the base station 10 to the base station 20.

In this embodiment, the mobile station 40 moves from the cell region of the base station 10, via the region where the cell regions of the two base stations overlap, to the cell region of the base station 20.

The base stations 10 and 20 have a function of periodically issuing a pilot signal. The base stations 10 and 20 have a function of changing at any time the hand-off parameters on the basis of Ec/Io of the pilot signal notified by the state monitor 30. Furthermore, the base stations 10 and 20 have a function of noticing the changed hand-off parameters to the mobile station 40.

The state monitor 30 constantly measures Ec/Io of the pilot signal, and has a function of informing the base stations of Ec/Io of the pilot signal, periodically or at the request from the base stations 10 and 20.

The mobile station 40 constantly measures Ec/Io of the pilot signal, and has a function of executing hand-off on the basis of the hand-off parameters noticed by the base stations.

Configurations and functions of the individual components of the mobile communication system of the invention will now be described.

The configuration and functions of the state monitor 30 will first be described.

Referring to Fig. 1 B, the state monitor 30 comprises an antenna section 301, a radio section (TRX) 302, a signal processor 303, and a controller 304.

The radio section 302 is connected to the antenna section 301, the signal processor 303, and the controller 304. The signal processor 303 is connected to the radio section 302 and the controller 304. The controller 304 is connected to the radio section 302, the signal processor 303, and a memory 305.

The antenna section 301 comprises an antenna, coaxial cable and the like. The radio section 302 has a function of transmitting and receiving radio signals. The signal processor 303 has a function of performing digital signal processing for converting a radio signal into an original signal, and an original signal into a radio signal. The controller 304 has a function of controlling the radio section 302 and the signal processor 303. The memory 305 has a memory for storing data.

When receiving a radio signal, the radio section 302 receives the radio signal via the antenna section 301, and transmits the received radio signal to the signal processor 303. The signal processor 303 applies digital signal processing to the radio signal received from the radio section 302, and fetches the original signal. At this point in time, the signal processor 303 measures Ec/Io of the pilot signals issued by the base stations 10 and 20 on the basis of the received signal.

When transmitting a radio signal, the signal processor 303, upon receiving the radio signal, a digital signal processing is applied to the original signal including data representing Ec/Io of the measured pilot signal, and transmits the same to the radio section 302. The radio section 302 transmits the signal received from the signal processor 303 to the base stations 10 and 20 via the antenna section 301.

The controller 304 controls the radio section 302 and the signal processor 303, and measures Ec/Io of the pilot signal. The controller 304 controls the radio section 302 and the signal processor 303 periodically or/and at the notice request of Ec/Io of the pilot signal received from the base stations 10 and 20, and informs the base stations 10 and 20 of Ec/Io of the pilot signal.

The configuration and functions of the base stations 10 and 20 will now be described.

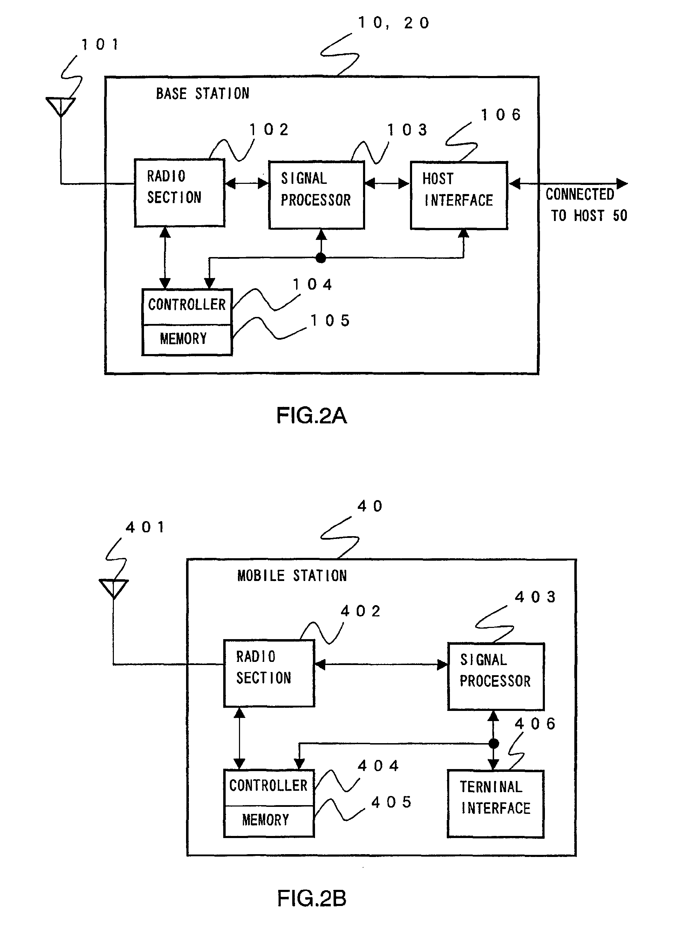

Referring to Fig. 2A, the base station 10 or 20 comprises an antenna section 101, a radio section (TRX) 102, a signal processor 103, a controller 104, and a host interface 106.

The radio section 102 is connected to the antenna section 101, the signal processor 103, and the controller 104. The signal processor 103 is connected to the radio section 102, the controller 104, and the host interface 106. The controller 104 is connected to the radio section 102, the signal processor 103, the memory 105, and the host interface 106. The host interface 106 is connected to the signal processor 103 and the controller 104.

The antenna section 101 comprises an antenna, coaxial cable and the like. The radio section 102 has a function of transmitting and receiving radio signals. The signal processor 103 has a function of performing digital signal processing for converting a radio signal into an original signal, and the original signal into a radio signal. The controller 104 has a function of controlling the radio section 102, the signal processor 103 and the host interface 106. The controller 104 has a function of determining hand-off parameters from Ec/Io of the pilot signal notified by the state monitor 30. The memory 105 has a memory for storing data. The host interface 106 is wire-connected to the host 50.

When receiving a radio signal, the radio section 102 receives the radio signal via the antenna section 101, and transmits the received signal to the signal processor 103. The signal processor 103 digital-signal-processes the radio signal received from the radio section 102, and fetches the original signal. The original signal fetched as above includes data showing Ec/Io of the pilot signal notified by the state monitor 30 and data showing Ec/Io of the pilot signal notified from the mobile station 40. The controller 104 determines hand-off parameters from the data showing Ec/Io of the pilot signal notified by the state monitor 30, as fetched by the signal processor 103. The thus determined hand-off parameters are temporary stored in the memory 105. The signal processor 103 informs the host 50, via the host interface 106, of the data shown Ec/Io of the pilot signal notified from the mobile station 40.

When transmitting a radio signal, the signal processor 103 digital-signal-processes the original signal and transmits the same to the radio section 102. The radio section 102 transmits the signal received from the signal processor 103 to the mobile station 40 via the antenna section 101. The original signal includes a pilot signal transmitted by this base station, data showing hand-off parameters determined as above from the controller 104, and data for requesting the state monitor 30 to give a notice of Ec/Io of the pilot signal.

The controller 104 controls, when receiving the above-mentioned radio signal and when transmitting the radio signal, the radio section 102, the signal processor 103, and the host interface 106. Particularly, the controller 104 controls the radio section 102 and the signal processor 103 so as to transmit the radio signal for informing the mobile station 40 in communication of the hand-off parameter values at every change in the hand-off parameter values. As a result, Ec/Io of the pilot signal of the base station measured by the state monitor 30 is reflected in the hand-off parameters set in the mobile station 40 in a real-time manner.

The configuration and the functions of the mobile station 40 will now be described.

Referring to Fig. 2B, the mobile station 40 has an antenna section 401, a radio section (TRX) 402, a signal processor 403, a controller 404, and a terminal interface 406.

The radio section 402 is connected to the antenna section 401, the signal processor 403, and the controller 404. The signal processor 403 is connected to the radio section 402, the controller 404, and the terminal interface 406. The controller 404 is connected to the radio section 402, the signal processor 403, the memory 405, and the terminal interface 406. Hand-off parameters are stored in the memory 405.

The antenna section 401 comprises an antenna, a coaxial cable and the like. The radio section 402 has a function of transmitting and receiving a radio signal. The signal processor 403 has a function of performing digital signal processing for converting a radio signal into an original signal, and an original signal into a radio signal. The controller 404 has a function of controlling the radio section 402, the signal processor 403, and the terminal interface 406. The memory 405 has a memory for storing data. The terminal interface 406 is an interface with a user, and comprises keys, a display and the like provided on the mobile station 40.

When receiving a radio signal, the radio section 402 receives the radio signal via the antenna section 401, and transmits the received radio signal to the signal processor 403. The signal processor 403 digital-signal-processes the radio signal received from the radio section 402, and fetches the original signal. The signal processor 30 measures Ec/Io of each of the pilot signals transmitted by the base stations 10 and 20 on the basis of the received signal. When hand-off parameters notified from the base stations 10 and 20 are contained in the data included in the fetched original signal, the signal processor 403 gives a notice of the hand-off parameters to the controller 404. The controller 404 stores the notified hand-off parameters in the memory 405. The information to be presented to the user from among the data contained in the fetched original signal is transmitted to the terminal interface 406.

When transmitting a radio signal, the signal processor 403 digital-signal-processes the original signal, and transmits the same to the radio section 402. The radio section 402 transmits the signal received from the signal processor 403 to the base stations 10 and 20 via the antenna section 401. Data entered from the terminal interface 406 and data showing Ec/Io of the pilot signal as measured are contained in the original signal.

When transmitting or receiving the above-mentioned radio signal, the controller 404 controls the radio section 402 and the signal controller 403. Particularly, the controller 404 controls communication start with the hand-off destination base station, or communication end with the base station in communication on the basis of the result of comparison of Ec/Io of the pilot signal as measured by the signal processor 403 and the hand-off parameters stored in the memory 405.

In this case, the mobile station 40 constantly measures Ec/Io of the pilot signals transmitted from the base stations 10 and 20, as a hand-off function. The mobile station 40 has a function of giving a notice of Ec/Io of the pilot signal measured as above to the base station 10 in communication when the measured value is over T_ADD or under T_DROP. As a result, when the following function is added to the controller 404, the mobile station 40 can be used as a state monitor 30. The controller 404 controls the radio section 402 and the signal processor 403 so as to give a notice of Ec/Io of the pilot signal to the base stations 10 and 20, periodically or/and in response to a notice request of Ec/Io of the pilot signal received from the base stations 10 and 20.

The host 50 has a function of controlling operation of the base stations 10 and 20. When Ec/Io of the pilot signal from the base station 20 of over T_ADD is notified via the base station 10 from the mobile station 40, the host 50 instructs the base station 20 to start communication with the mobile station 40. When the fact that Ec/Io of the pilot signal from the base station 10 is under T_DROP is notified from the mobile station 40 via the base station 10 or 20, the host 50 instructs the base station 10 to end communication with the mobile station 40.

The hand-off function of the mobile communication system of the invention will now be described with reference to the drawings.

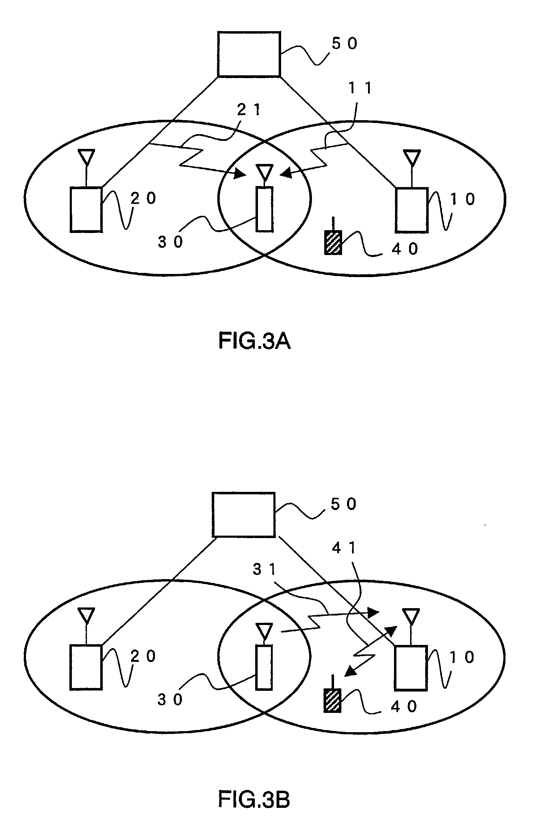

Figs. 3A, 3B, 4A, 4B and 5 are constitutional diagrams for explaining hand-off of the mobile communication system of the invention.

Hand-off operation of the mobile communication system of the invention will now be described with reference to these drawings.

In the state shown in Fig. 3A, the mobile station 40 is in the cell region of the base station 10. In this state, the state monitor 30 receives a pilot signal 11 from the base station 10 and a pilot signal 21 from the base station 20, and acquires Ec/Io(Ec(A)/Io) of the received pilot signal 11 and Ec/Io(Ec(B)/Io) of the received pilot signal 21.

In the state shown in Fig. 3B, the mobile station 40 is in the cell region of the base station 10, and is in communication 41 with the base station 10. The state monitor 30 acquires Ec(A)/Io and Ec(B)/Io. In this state, the state monitor 30 gives a notice 31 of Ec(A)/Io and Ec(B)/Io to the base station 10. Upon receipt of this notice 31, the base station 10 sets T_ADD(B) on the basis of the value of the notified Ec(B)/Io. In this case, T_ADD(B) represents T_ADD of the base station 20. Irrespective of the state shown in Fig. 3B, the state monitor 30 gives a notice of Ec(A)/Io and Ec(B)/Io to the base station 10.

The notifying operation to the base station 10 of Ec(A)/Io and Ec(B)/Io carried out by the state monitor 30 is conducted periodically. This notifying operation may be performed in response to a request from the base station 10. Apart from the above case, the notifying operation may be made in response to a request from the mobile station 40 receiving the notice via the base station 10.

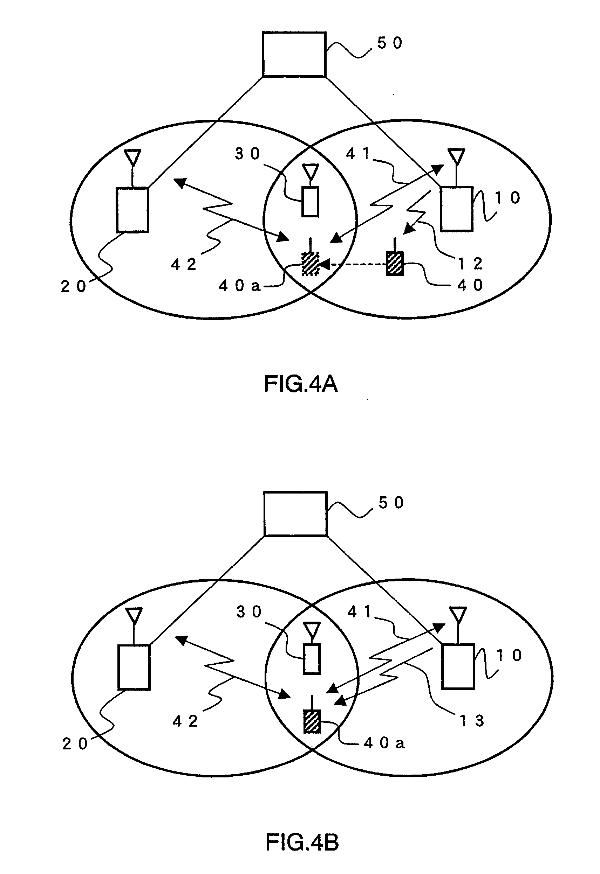

In the state shown in Fig. 4A, the mobile station 40 moves to a region in which cells of the base stations 10 and 20 overlap. The mobile station 40 which has moved into the cell duplication region is referred to as the mobile station 40a. The mobile station 40a is in communication 41 with the base station 10. The mobile station 40a starts communication with the base station 20.

Communication start operation between the above-mentioned mobile station 40a and the base station 20 will now be described.

The base station 10 gives a notice 12 of the set T_ADD(B) to the mobile station 40. The mobile station 40 stores the value of T_ADD(B) notified by the base station 10.

The notifying operation from the base station 10 to the mobile station 40 as described above is conducted in response to the notifying operation from the state monitor 30 to the base station 10. The mobile station updates the value of T_ADD(B) stored in the preceding run into the value of T_ADD(B) notified this time, and stores the updated value.

The value of Ec(B)/Io of the pilot signal 21 measured by the mobile station 40a having moved to the cell duplication region is higher than the value of T_ADD(B). At this moment, the mobile station 40a gives a notice of this Ec(B)/Io to the base station 10. The base station 10 gives a notice of this Ec(B)/Io to the host 50. Upon receipt of this notice of Ec(B)/Io, the host 50 requests the base station 20 to prepare for starting communication with the mobile station 40a. On the other hand, the mobile station 40a receives a communication start instruction from the host 50 via the base station 10, establishes communication with the base station 20, and moves into a communication 42.

T_ADD(B) is determined on the basis of Ec(B)/Io of the pilot signal 21 measured by the state monitor 30. The position of the mobile station 40a upon starting operation between the mobile station 40a and the base station 20 is therefore substantially constant. As a result, the mobile communication system of the invention differs from the conventional mobile communication system in which the position of the mobile station 40 upon communication start operation between the mobile station 40 and the base station 20 varies with the load on the base station 10 or 20.

In the state shown in Fig. 4B, the mobile station 40a is in a region where cell regions of the base stations 10 and 20 overlap. The mobile station 40a is in communication 41 with the base station 10. The mobile station 40a is in communication 42 also with the base station 20. In this state, the base station 10 gives a notice 13 of T_DROP(A) to the mobile station 40a. The mobile station 40a stores T_DROP(A). In this case, T_DROP(A) represents T_DROP of the base station 10. This T_DROP(A) is determined on the basis of Ec(A)/Io of the pilot signal 11 measured by the state monitor 30.

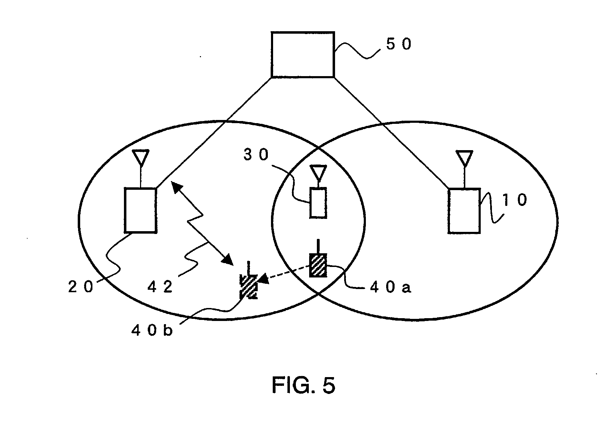

In the state shown in Fig. 5, the mobile station 40 moves from the cell duplication region of the base stations 10 and 20 to the single region of the base section 20. The mobile station 40a having moved to the single cell region of the base station 20 is referred to here as a mobile station 40b. When the value of Ec(A)/Io of the pilot signal 11 from the base station 10, as measured by the mobile station 40b is under the value of T_DROP(A), the mobile station 40b and the base station 10 conduct communication end operation, and the mobile station 40b discontinues communication with the base station 10.

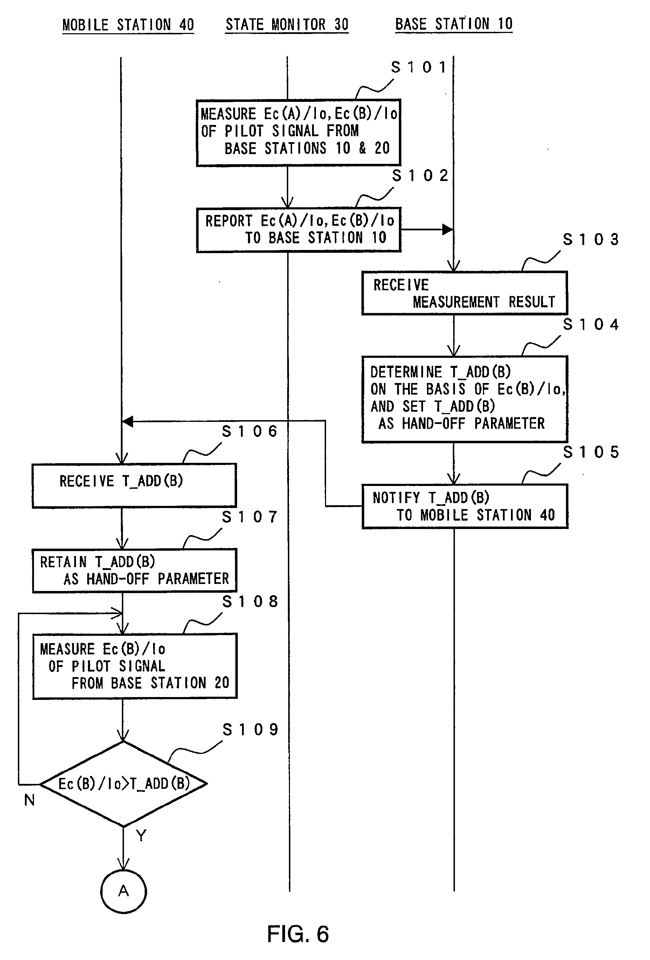

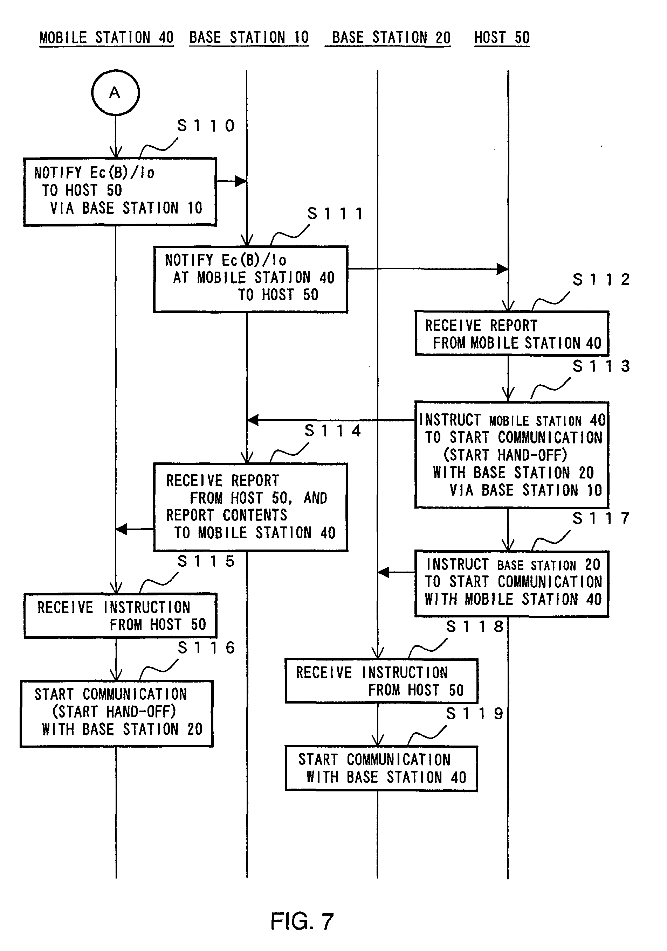

Figs. 6 and 7 are flowcharts illustrating communication start operation between the base station 20 and the mobile station 40 in Fig. 1 A from among the hand-off operations of the mobile communication system of the invention.

This communication operation is a part of operations to be carried out when the mobile station 40 is in communication with the base station 10 and not in communication with the base station 20, and when the mobile station 40 conducts hand-off from the base station 10 to the base station 20.

The communication start operation between the base station 20 and the mobile station 40 will be described with reference to Fig. 1 together with Figs. 6 and 7.

The mobile station 40 measures Ec/Io(Ec(A)/Io and Ec(B)/Io) of the pilot signals transmitted from the base stations 10 and 20 by means of the state monitor 30 (step S101). This measurement is performed periodically, or at the request of the base station 10. Then, the mobile station 40 reports Ec/Io of the measured pilot signal to the base station 10 (step S102).

Upon receipt of the result of measurement from the mobile station 40 (step S103), the base station 10 determines T_ADD(B) on the basis of Ec(B)/Io of the pilot signal transmitted from the base station 20 (step S104). Then, the base station 10 gives a notice of the set T_ADD(B) to the mobile station 40 (step S105).

Upon receipt of T_ADD(B) informed by the base station 10 (step S106), the mobile station 40 retains the received T_ADD(B) (step S107). Then, the mobile station 40 measures Ec(B)/Io of the pilot signal transmitted from the base station 20 (step S108).

The mobile station 40 compares EC(B)/Io of the pilot signal transmitted from the base station 20 as measured in step S108 above, and the retained T_ADD(B) (step S109). When Ec(B)/Io is "Y" larger than T_ADD(B), as a result of measurement, the process advances, to execute the following step S110. When Ec(B)/Io is "N" smaller than T_ADD(B), the mobile station 40 returns to step S108 mentioned above to repeatedly execute the above-mentioned steps.

When the above-mentioned step S109 gives a "Y", the mobile station 40 gives a notice of Ec(B)/Io of the pilot signal from the base station 20 measured as above to the host 50 via the base station 10 (steps S110 and S111).

Upon receipt of the notice of Ec(B)/Io of the pilot signal in the base station 20 measured by the mobile station 40 from the base station 10 (step S112), the host 50 gives a notice of an instruction information instructing to start communication between the mobile station 40 and the base station 20 to the mobile station 40 via the base station 10 (steps S113 and S114).

The mobile station 40 receives the instructing information (step S115), and executes communication operation for starting communication with the base station 20 (step S116).

On the other hand, the host 50 instructs the base station 20 to start communication with the mobile station 40 after the above-mentioned step S113 (step S117).

The base station 20 receives the instruction to start communication with the mobile station 40 from the host 50 (step S118), and executes communication operation for starting communication with the mobile station 40 (step S119).

Through the aforementioned steps, communication between the mobile station 40 and the base station 20 is started.

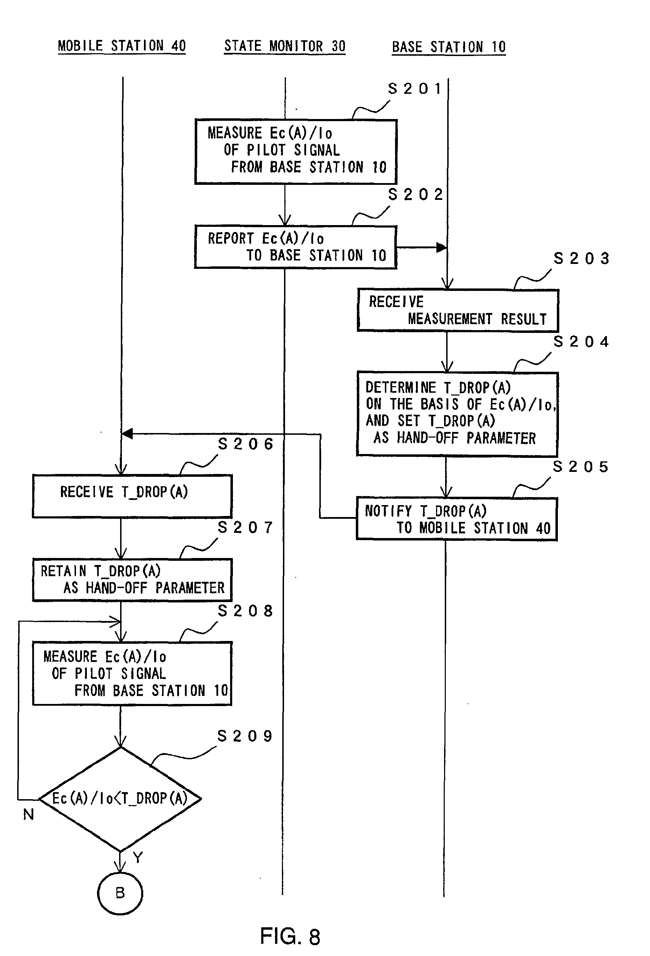

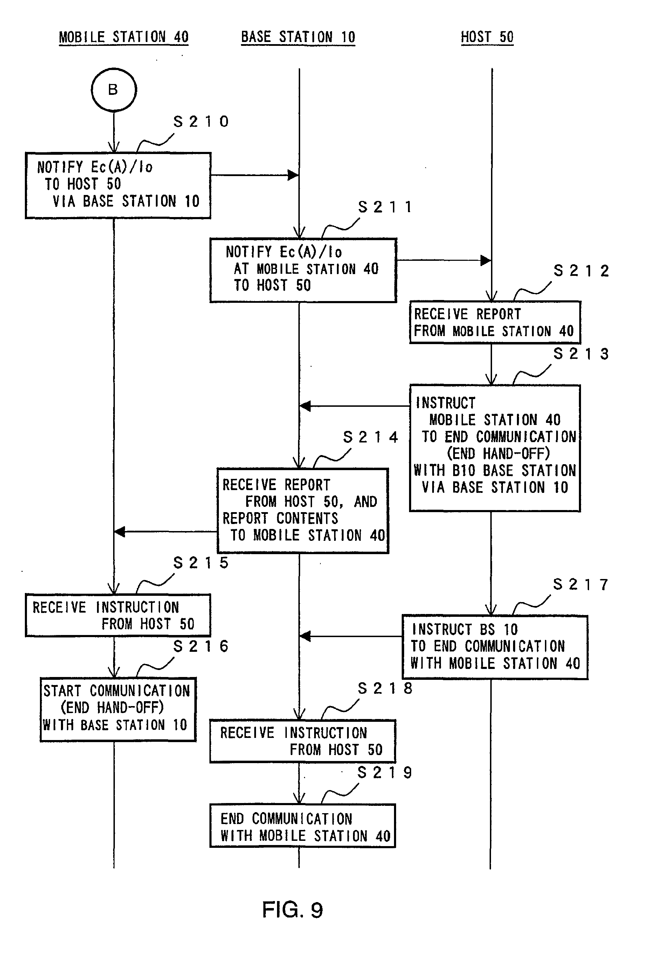

Figs. 8 and 9 flowcharts illustrating the communication end operation between the base station 10 and the mobile station 40 in Fig. 1A, from among hand-off operations of the mobile communication system of the invention.

This communication end operation is a part of operations for transfer from a state in which the mobile station 40 is in communication with the base station 10, not with the base station 20, to hand-off by the mobile station 40 from the base station 10 to the base station 20.

The communication end operation between the base station 10 and the mobile station 40 will be described with reference to Fig. 1A, together with Figs. 8 and 9.

The state monitor 30 measures Ec(A)/Io of the pilot signal transmitted from the base station 10 (step S201). This measurement is carried out periodically or at the request of the base station 10. Then, the state monitor 30 reports the measured Ec(A)/Io to the base station 10 (step S202).

The base station 10 receives the result of measurement (step S203), and determines T_DROP(A) on the basis of the result of measurement (step S204). Then, the base station 10 gives a notice of the set T_DROP(A) to the mobile station 40 (step S205).

Upon receipt of T_DROP(A) notified by the base station 10 (step S206), the mobile station 40 retains T_DROP(A) (step S207). Then, the mobile station 40 measures the level of Ec(A)/Io of the pilot signal transmitted from the base station 10 (step S208).

The mobile station 40 compares the measured Ec(A)/Io and T_DROP(A) of the base station 10 (step S209). When Ec(A)/Io is "Y" smaller than T_DROP(A) as a result of this measurement, the mobile station 40 advances to execute the next step S210. On the other hand, when Ec(A)/Io is "N" larger than T_DROP(A), the mobile station 40 returns to step S208 to repeatedly execute the aforementioned steps.

When step S209 gives a result of "Y", the mobile station 40 gives a notice of Ec(A)/Io of the pilot signal from the measured base station 10 to the host 50 via the base station 10 (steps S210 and S211). In this case, step S211 executed by the base station 10, i.e., the notice of the information from the mobile station 40 to the host 50, may be made via another base station in connection (for example the base station 20).

Upon receipt of the notice of Ec(A)/Io of the pilot signal from the base station 10 measured by the mobile station 40 from the base station 10 (step S212), the host 50 gives a notice of an instructing information instructing end of communication between the mobile station 40 and the base station 10 to the mobile station 40 via the base station 10 (steps S213 and S214). In this case, steps S213 and S214 executed by the base station 10, i.e., the notice of the information from the host 50 to the mobile station 40 may be made via another base station in connection (for example, the base station 20).

The mobile station 40 receives the instructing information (step S215), and executes the communication end (hand-off end) operation for ending communication with the base station 10 (step S216).

On the other hand, the host 50 instructs the base station 10 to end communication with the mobile station 40 after the above-mentioned step S213 (step S217).

The base station 10 receives the instruction to end communication with the mobile station 40 from the host 50 (step S218), and executes communication end operation for ending communication with the mobile station 40 (step s219).

Through these steps, communication operation between the mobile station 40 and the base station 10 is completed.

In this case, in a case of a mobile communication system having three or more base stations, the present invention is applicable by setting T_ADD and T_DROP of the hand-off parameters as described above as the hand-off operation by the mobile station between two adjacent base stations from among the three or more base stations.

In a first variant of the mobile communication system of the invention, T_ADD determined by use of the state monitor 30 as described above is used only for the communication start operation between the base station 20 and the mobile station 40. In this first variant, only T_ADD from among the hand-off parameters varies in response to the load applied to the system. T_DROP from among the hand-off parameters is determined by a conventionally used method.

In a second variant of the mobile communication system of the invention, T_DROP determined by use of the state monitor 30 as described above is used only for the communication end operation between the base station 10 and the mobile station 40. In this second variant, only T_DROP from among the hand-off parameters varies with the load applied to the system. T_ADD from among the hand-off parameters is determined by a conventionally used method.

According to the mobile communication system of the invention, it is possible to keep cell regions or sector regions of the individual base stations substantially uniform. Because of the possibility to keep a constant hand-off point in the mobile communication system, it is possible to improve communication quality.

Since the state monitor which monitors the state of Ec/Io of the pilot signal is used, it is possible to always monitor Ec/Io of the pilot signal varying at a point of proposed hand-off at all times. In addition, hand-off parameters can always be automatically controlled at a point by always monitoring Ec/Io of the pilot signal at a point of proposed hand-off.

A state monitor prepared by adding a simple change to an ordinary mobile station can be used as a state monitor. Apart from this, an ordinary mobile station can be used as a state monitor. It is therefore possible to easily install the same and reduce the cost.

The features of the present invention will now be described in comparison with the conventional technique.

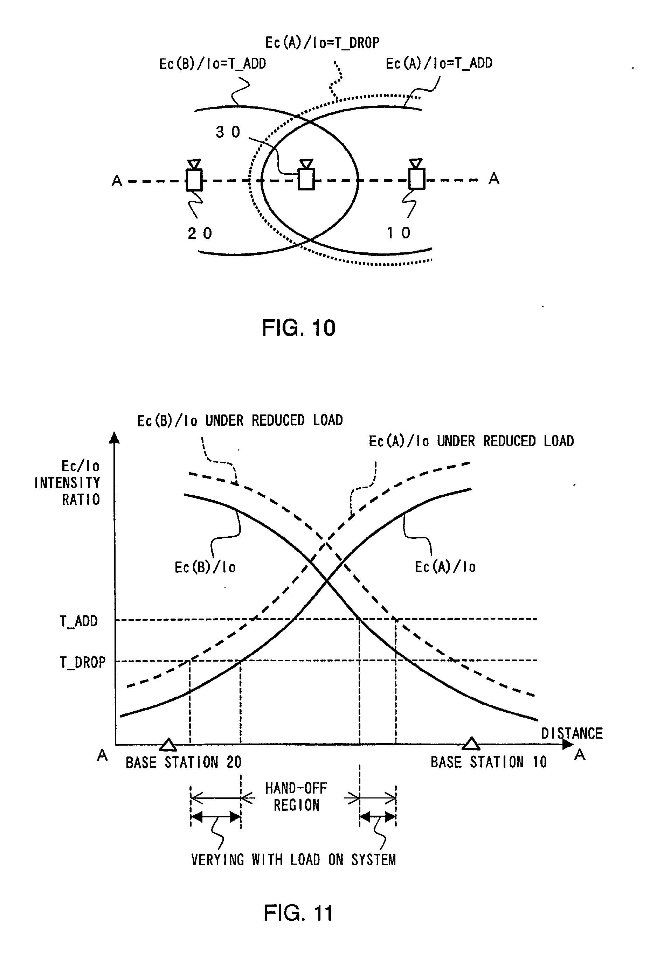

Fig. 10 illustrates cell regions in two adjacent base stations 10 and 20.

Fig. 11 illustrates hand-off region corresponding to Ec/Io of the pilot signal on the line A-A in Fig. 10.

In Fig. 11, the ordinate represents the value of Ec/Io of the pilot signal, and the abscissa represents the distance along the line A-A. Ec/Io of the pilot signal from the base station 10 is expressed as Ec(A)/Io, and Ec/Io of the pilot signal from the base station 20, as Ec(B)/Io.

The curve for Ec(A)/Io indicated by a solid line represents values of Ec(A)/Io on the line A-A of the base station 10 in communication with a prescribed number of mobile stations. The curve for Ec(A)/Io indicated by a broken line represents values of Ec(A)/Io on the line A-A when the base station 10 is in communication with mobile stations in a number smaller than the above-mentioned prescribed number, i.e., when the load on the base station 10 is reduced.

The curve for Ec(B)/Io indicated by the solid line represents values of Ec(B)/Io on the line A-A when the base station 20 is in communication with mobile stations (not shown) in a prescribed number. The curve indicated by a broken line represents values of Ec(B)/Io when the base station 20 is in communication with mobile stations in a number smaller than the above-mentioned prescribed number, i.e., when the load on the base station 20 is reduced.

T_ADD and T_DROP are hand-off parameters stored in the mobile station and have fixed values.

In the case of the curve of values of Ec(A)/Io expressed by the broken line, the point where the mobile station conducts communication end operation with the base station 10 is more distant from the base station 10 as compared with the curve of Ec(A)/Io shown by the solid line. Similarly, in the case of the curve showing values of Ec(B)/Io expressed by a broken line, the point where the mobile station 40 performed communication start operation with the base station 20 approaches the base station 10 as compared with the curve of Ec(B)/Io shown by the solid line. From this fact, when load applied onto the base stations 10 and 20 is reduced, the cell duplication region of the both base stations 10 and 20 expands.

When the load on the base stations 10 and 20 increases, i.e., when a larger number of mobile stations are in communication with the base stations 10 and 20, intensity of interference wave (lo) increases. As a result, the circumstances are just reverse to the case where the load on the base stations 10 and 20 is reduced. Therefore, the point where the mobile station conducts communication end operation with the base station 10 becomes closer to the base station 10. On the other hand, the point where the mobile station performed communication start operation with the base station 20 becomes more distant from the base station 10. As a result, the cell duplication region of the both base stations 10 and 20 becomes smaller. In conclusion, in the conventional technique, the hand-off region varies with the load acting on the base stations 10 and 20.

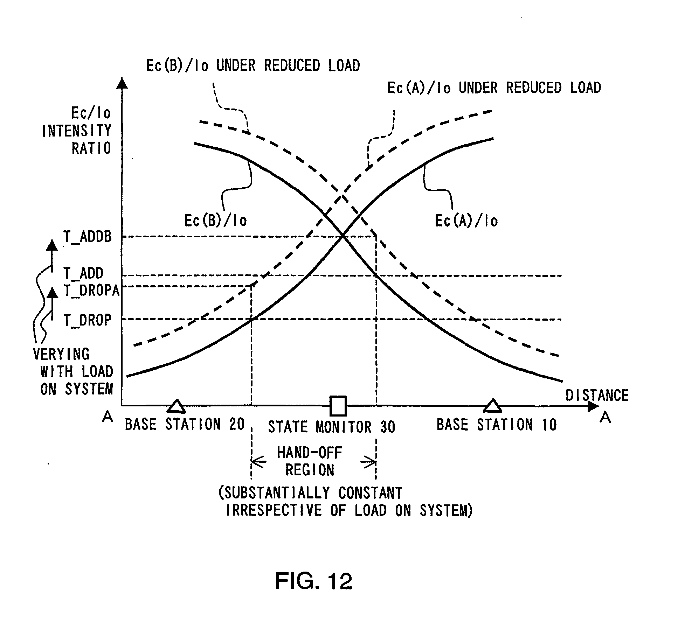

Fig. 12 illustrates the hand-off region corresponding to Ec/Io of the pilot signal on the line A-A in Fig. 10 according to the present invention.

In Fig. 12, the ordinate represents value of Ec/Io of the pilot signal, and the abscissa, the distance on the line A-A. Curves of Ec(A)/Io and Ec(B)/Io expressed by a solid line and the broken line are the same as those shown in Fig. 11.

T_ADD, T_ADDB, T_DROP, and T_DROPA are hand-off parameters stored in the mobile station (not shown). These hand-off parameters are determined by the base station 10 on the basis of Ec/Io of the pilot signal from the base stations 10 and 20 as measured by the state monitor 30 and notified from the base station 10 to the mobile station.

Referring to Fig. 12, in the base of the curve of Ec/Io indicated by the solid line, the hand-off parameters stored in the mobile station are T_ADD and T_DROP notified by the base station 10.

When the load acting on the base station 10 and 20 is reduced, intensity of interference wave (lo) is reduced. In the case of the curve representing values of Ec(A)/Io as indicated by the broken line, the value of the pilot signal received from the base stations 10 and 20 as measured by the state monitor 30 increases. The state monitor 30 gives a notice of an increased value of Ec/Io the above-mentioned pilot signal to the base station 10. The base station 10 converts, from the notified Ec/Io of the above-mentioned pilot signal, the hand-off parameters: from T_ADD to T_ADDB and from T_DROP to T_DROPA, and gives a notice of this result to the mobile station.

As a result, the hand-off parameters of the mobile station become T_ADDB and T_DROPA notified by the base station 10. To judge from this, the point where the mobile station conducts hand-off with the base station 10 becomes substantially constant, irrespective of the load acting on the base stations 10 and 20.

When the load acting on the base stations 10 and 20 increases, intensity of interference wave (lo) increases. In this case, hand-off parameters of the mobile station are set in response to the increased load. The mobile station conducts hand-off by use of these hand-off parameters. The hand-off point of the mobile station, in this case also, is kept substantially constant. From the above-mentioned result, the hand-off region is substantially constant in this embodiment, irrespective of the load acting on the base stations 10 and 20.

### Industrial Applicability

As described above, the mobile communication system and the communication control method thereof of the present invention is suitable for a system in which frequencies used for communication between a mobile station and a base station are uniform for all the base stations as in the CDMA method.

## Claims

1. A mobile communication system used in a method applied in communication between a mobile station and a base station, in which frequency is uniform for all base stations, comprising a first base station issuing a first pilot signal, a second base station issuing a second pilot signal, and a state monitor and having a duplication region in which a cell region of said first base station and a cell region of said second base station overlap; wherein:
said state monitor, provided in said duplication region, measures a first electric field intensity of said first pilot signal and a second electric field intensity of said second pilot signal, and notifies the result thereof to said first base station;
said first base station sets hand-off parameters on the basis of the first and second electric field intensities notified by the state monitor, and notifies said hand-off parameters to said mobile station; and
said mobile station, while moving from the cell region of the first base station, through said duplication region, to the cell region of said second base station, measures a third electric field intensity of said first pilot signal and a fourth electric field intensity of said second pilot signal, and executes hand-off from said first base station to said second base station on the basis of the hand-off parameters notified from said first base station, and said third and fourth electric field intensities.

2. A mobile communication system according to claim 1, wherein:
said hand-off parameters include a first parameter;
said mobile station establishes communication with said second base station when the fourth electric field intensity of said second pilot signal is at least equal to that of said first parameter.

3. A mobile communication system according to claim 2, wherein:
said first parameter is dynamically set on the basis of said second electric field intensity notified by said state monitor so as to keep substantially a constant cell region of said second base station.

4. A mobile communication system according to claim 1, wherein:
said hand-off parameters include a second parameter; and
said mobile station ends communication with said first base station when the third electric field intensity of said first pilot signal is smaller than that of said second parameter.

5. A mobile communication system according to claim 4, wherein:
said second parameter is dynamically set on the basis of said first electric field intensity notified by said state monitor so as to keep substantially a constant cell region of said first basic station.

6. A mobile communication system according to claim 1, wherein:
said first base station and said second base station are arranged in the proximity of each other; and
said state monitor is arranged at a point of hand-off of said mobile station.

7. A mobile communication system according to claim 1, wherein:
said first electric field intensity and said third electric field intensity comprise intensity ratios relative to the electric field intensity of said first pilot signal and the electric field intensity of interference wave;
said second electric field intensity and said fourth electric field intensity comprise intensity ratios relative to the electric field intensity of said second pilot signal and the electric field intensity of said interference wave; and
said hand-off parameters are expressed by an intensity ratio of the electric field intensity of said pilot signal and the electric field intensity of said interference wave.

8. A mobile communication system according to claim 1, wherein:
said state monitor periodically notifies said first electric field intensity and said second electric field intensity to said first base station.

9. A mobile communication system according to claim 1, wherein:
said state monitor notifies said first electric field intensity and said second electric field intensity to said first base station, in response to a notification request of said first base station.

10. A mobile communication system according to claim 1, wherein:
said state monitor is replaced by said mobile station.

11. A communication control method of a mobile communication system used for communication between a mobile station and a base station, in which all frequencies are uniform for all the base stations, wherein there are provided a first base station, a second base station and a state monitor; there is provided a duplication region where respective cell regions of the first base station and the second base station overlap; said state monitor is provided in said duplication region; and said mobile station is communicating with said first base station; and wherein:
(a) said first base station issues a first pilot signal;
(b) said second base station issues a second pilot signal;
(c) said state monitor measures a first electric field intensity of said first pilot signal and a second electric field intensity of said second pilot signal, and notifies the result of measurement to said first base station;
(d) said first base station sets hand-off parameters on the basis of said first and second electric field intensities notified to said state monitor;
(e) said first base station notifies said hand-off parameters to said mobile station;
(f) said mobile station measures a third electric field intensity of said first pilot signal and a fourth electric field intensity of said second pilot signal; and
(g) said mobile station executes hand-off from said first base station to said second base station on the basis of said hand-off parameters notified by said first base station and said third and fourth electric field intensities.

12. A communication control method of a mobile communication system according to claim 11, wherein:
said hand-off parameters include a first parameter; and
in (g) above, said mobile station establishes communication with said second base station when the fourth electric field intensity of said second pilot signal is equal at least to said first parameter.

13. A communication control method of a mobile communication system according to claim 12, therein:
said first parameter is dynamically set on the basis of said second electric field intensity notified by said state monitor so that the cell region of said second base station is substantially constant.

14. A communication control method of a mobile communication system according to claim 11, wherein:
said hand-off parameters include a second parameter; and
in (g) above, said mobile station ends communication with said first base station when the third electric field intensity of said first pilot signal is smaller than that of said second parameter.

15. A communication control method of a mobile communication system according to claim 14, wherein:
said second parameter is dynamically set on the basis of said first electric field intensity notified by said state monitor so that the cell region of said first base station is substantially constant.

16. A communication control method of a mobile communication system according to claim 11, wherein:
said first base station and said second base station are arranged in the proximity of each other; and
said state monitor is provided at a point of hand-off of said mobile station.

17. A communication control method of a mobile communication system according to claim 11, wherein:
said first electric field intensity and said third electric field intensity comprise intensity ratios relative to the electric field intensity of said first pilot signal and the electric field intensity of an interference wave;
said second electric field intensity and said fourth electric field intensity comprise intensity ratios relative to the electric field intensity of said second pilot signal and the electric field intensity of said interference wave; and
said hand-off parameters are expressed by an intensity ratio of the electric field intensity of said pilot signal and the electric field intensity of said interference wave.

18. A communication control method of a mobile communication system according to claim 11, wherein:
in (c) above, said state monitor periodically notifies said first electric field intensity and said second electric field intensity.

19. A communication control method of a mobile communication system according to claim 11, wherein:
in (c) above, said state monitor notifies said first electric field intensity and said second electric field intensity to said first base station in response to a notice request from said first base station.
